# EUROPEAN PATENT SPECIFICATION

(11) **EP 2 316 803 B1**
(45) Date of publication and mention of the grant of the patent: **05.08.2015**
(21) Application number: 10189015.0
(22) Date of filing: 27.10.2010
(51) Int. Cl.: C04B 111/00, C04B 111/20, C04B 28/02, C04B 20/10

(54) **Photocatalytic additive for binders**
Photokatalytischer Zusatzstoff für Bindemittel
Additif photocatalytic pour liant

(30) Priority: 28.10.2009 IT TO20090829
(43) Date of publication of application: 04.05.2011
(73) Proprietor: Buzzi Unicem S.p.A., 15033 Casale Monferrato (AL) (IT); Università degli Studi di Torino - Dipartimento di Chimica IFM, 10125 Torino (IT); Università del Piemonte Orientale - Dipartimento di Scienza e Tecnologie Avanzate, 15100 Alessandria (IT)
(72) Inventor: Canonico Fulvio, I-10138, TORINO (IT); Pellerey, Diego, I-10010, SETTIMO VITTONE (Torino) (IT); Boccaleri, Enrico, I-15121, SPINETTA MARENGO (Alessandria) (IT)
(74) Representative: Gerbino, Angelo

(56) References cited:
- JP-A- 10 195 379
- JP-A- 11 315 275
- JP-A- 2007 039 286
- JP-A- 2007 275 731
- JP-A- 2009 209 250
- US-A- 5 518 992
- US-A1- 2002 010 097
- C.DOMINGO,E.LOSTE,J.FRAILE: "Grafting of trialkoxysilane on the surface of nanoparticles by conventional wet alcoholic and supercritical carbon dioxide deposition methods", THE JOURNAL OF SUPERCRITICAL FLUIDS, vol. 37, 2006, pages 72-86, XP002571431,

## Description

This invention relates to a photocatalytic additive for air-setting and hydraulic binders intended for example for the production of mortars, concretes and cementitious mixtures in general.

The addition to such binders of substances capable of catalysing the reaction between various pollutants present in the atmosphere and air and water in the presence of light is known in the art. These substances, and in particular titanium dioxide, are therefore defined as being "photocatalytic" and their presence offers the double advantage of reducing atmospheric pollution and preventing blackening of the visible surfaces of the cementitious mixtures used in structures due to the reaction between pollutants and the basic components in the latter.

Typically, photocatalytic substances are added to the entire mass of the binder so that the portion of these incorporated in the inner part is substantially inactive and therefore in practice wasted. As an alternative it has also been proposed that, once used in a structure, cementitious products should be coated with a thin layer of a cementitious mixture containing additives. The latter solution obviously offers better utilisation of the photocatalytic properties of the additive, but is complicated to implement.

C.DOMINGO, E.LOSTE, J.FRAILE: "Grafting of trialkosysilane on the surface of nanoparticles by conventional wet alcoholic and supercritical carbon dioxide deposition methods", THE JOURNAL OF SUPERCRITICAL FLUIDS, vol. 37, 2006, pages 72-86, XP002571431, criticizes the grafting of trialkoxysilane on the surface of nanoparticles by the conventional wet alcoholic methods, which results in cemented nanoparticles, whereas advises the adoption of supercritical carbon dioxide deposition methods.

JP-2009 209 250 A relates to the production of a photocatalyst coating film consisting of a dispersion of coated particles, which is applied in its entirety to a substrate.

JP-2007 039 286 A discloses a process for the provision of a titanium oxide sol which exhibits low photocatalytic activity.

The object of this invention is to overcome the abovementioned disadvantages of the known art.

According to the invention, this object is accomplished through a process for the production of a photocatalytic additive comprising a plurality of inorganic particles at least partly covered by a hybrid inorganic/organic coating, the said additive being obtained through a process which comprises the stages of:
- dispersing the inorganic particles in an alcohol or ether solvent,
- adding to the dispersion at least one organic silicon compound having the formula: 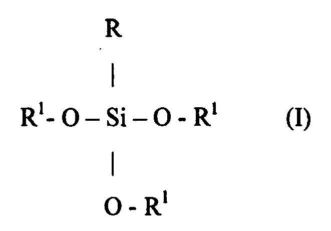 in which R and each R¹ separately represent a C₁-C₈ alkyl, a C₂-C₈ alkenyl or an aromatic residue which may be substituted with one or more C₁-C₈ alkyls, or 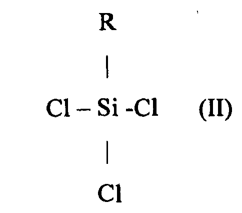 in which R has the same meaning as indicated in formula (I),
- adding water and mineral acid to the dispersion to bring about a pH in the range between 0.5 and 3 and the establishing of at least one chemical bond between a residue of the said organic compound and the surface of the said particles to form the said hybrid inorganic/organic coating,
- stirring the dispersion, and
- separating out a solid phase formed by the said at least partly coated particles from the dispersion.

Without wishing to be bound to any specific theory, it may be hypothesised that the organic silicon compound undergoes hydrolysis and condensation reactions in such a way that at least one of the Si-OR¹ or Si-Cl bonds originally present in its molecule are replaced by a bond which forms between the Si atom and the substrate comprising the surface of the particle - through a bridge provided by an atom of oxygen - with the formation of a hybrid inorganic/organic coating which wholly or partly covers the individual particles. For example, if all three of the bonds originally present are substituted then a structure of the following type is formed for each molecule of the organic silicon compound: 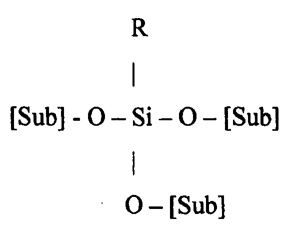 where Sub indicates the substrate.

The additive so obtained can be mixed with conventional binder, advantageously in a quantity of between 1 and 10% by weight with respect to the whole. This binder is an air-setting or hydraulic binder intended for the production of mortars, concretes or cementitious mixtures in general.

Once water has been added to the mixture of binder and photocatalytic additive, for example for the production of a mortar or concrete, the coated particles tend to migrate towards the surface of the mass in which they are incorporated as a result of the flotation properties conferred by the hybrid coating. In this way, the surface layer of the mortar or concrete becomes enriched with additive, most of which can thus exert its photocatalytic properties. This change in the concentration profile of the additive takes place automatically without requiring any external intervention, so that it can be achieved simply and economically.

For example, the organic silicon compound may be selected from the group comprising methyl triethoxysilane, phenyl triethoxysilane, isobutyl triethoxysilane, vinyl triethoxysilane, methyl trimethoxysilane, phenyl trimethoxysilane, isobutyl trimethoxysilane, vinyl trimethoxysilane, methyl trichlorosilane, phenyl trichlorosilane, isobutyl trichlorosilane and vinyl trichlorosilane.

Preferentially, the inorganic particles have a particle size such that d₁₀₀<20 µm and are formed of:
- a compound of formula XᵣYₜ, where X represents a chemical element belonging to the group of the transition elements or one of groups 13/IIIA, 14/IVA, 15/VA in the periodic table, Y represents a chemical element belonging to group 16/VIA in the periodic table, r and t separately represent integers of between 1 and 4, for example TiO₂, ZnS, or ZnO,
- a natural or synthetic mineral phase, or
- mixtures thereof.

In a favoured embodiment of the invention, the organic silicon compound is added to the dispersion of inorganic particles in a quantity of between 2 and 20% by weight with respect to the weight of those particles, while water is added in a quantity of between 5 and 40% by weight with respect to the weight of the organic silicon compound.

Advantageously, the stage of stirring the dispersion is carried out mechanically and/or through ultrasound, for a period of time of preferably between 2 and 4 hours and at a temperature of preferably between 20 and 60°C, while the solid phase is separated out by sedimentation or filtration and is subsequently dried for a period of time of preferably between 2 and 4 hours and at a temperature of preferably between 20 and 60°C

An example of an embodiment of the process according to the invention will now be provided merely by way of illustration and without restriction.

### EXAMPLE

3 g of TiO₂-anatas of nanometric particle size were dispersed in 40 ml of 95% ethanol. 300 mg of isobutyltriethoxysilane, 2 ml of water and 1.5 ml of 37% HCl were added to the dispersion while being stirred magnetically, yielding a pH of approximately 2. Stirring was then continued for 2 hours at a temperature of 45°C in such a way that an inorganic/organic hybrid coating with a siliceous base was formed on the particles of TiO₂-anatase.

The coated particles were separated from the liquid phase by sedimentation and dried in a stove at 60°C for 2 days yielding a photocatalytic additive whose Af (photocatalytic activity) measured according to standard UNI 11247 was 50.

Of course without altering the principle of the invention the particulars of embodiments and forms of implementation may be varied extensively from what has been described purely by way of example within the terms of the appended claims.

## Claims

1. Process for the production of a photocatalytic additive comprising a plurality of inorganic particles covered at least partially by an hybrid inorganic-organic coating, said process comprising the steps of:
- dispersion of the inorganic particles in an alcoholic or ethereal solvent,
- addition to the dispersion of at least one silicon organic compound having formula: 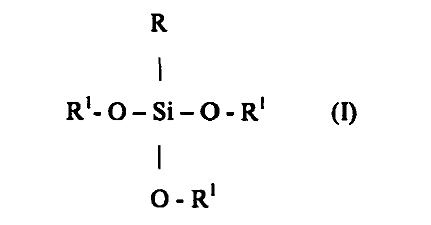
wherein R and each R¹ represent independently a C₁-C₈ alkyl, a C₂-C₈ alkenyl or an aromatic residue possibly substituted by one or more C₁-C₈ alkyls, or 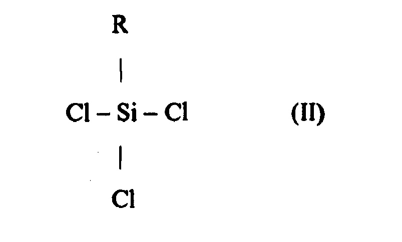 wherein R has the same meaning as in formula (I),
- addition to the dispersion of water and mineral acid so as to bring about a pH in the range 0.5-3 and the establishing of at least one chemical bond between a residue of said organic compound and the surface of said particles whereby said hybrid inorganic-organic coating is formed,
- stirring the dispersion, and
- separation from the dispersion of a solid phase formed by said at least partially coated particles.

2. Process according to claim 1, wherein said at least one silicon organic compound is added to said dispersion in an amount comprised between 2 and 20 wt % with regard to the weight of said particles.

3. Process according to claim 1 or 2, wherein said water is added in an amount comprised between 5 and 40 wt % with regard to the weight of said at least one silicon organic compound.

4. Process according to any one of the previous claims, wherein said silicon organic compound is chosen in the group consisting of methyltriethoxysilane, phenyltriethoxysilane, isobutyltriethoxysilane, vinyltriethoxysilane, methyltrimethoxysilane, phenyltrimetoxysilane, isobutyltrimethoxysilane, vinyl-trimethoxysilane, methyltrichlorosilane, phenyltrichlorosilane, isobutyltrichlorosilane and vinyltrichlorosilane.

5. Process according to any one of the previous claims, wherein said step of stirring the dispersion is performed mechanically and/or by ultrasounds, for a period of time preferably comprised between 2 and 4 hours and at a temperature preferably comprised between 20 and 60 °C.

6. Process according to any one of the previous claims, wherein said solid phase is separated by sedimentation or filtering and is successively dried for a period of time preferably comprised between 2 and 4 hours and at a temperature preferably comprised between 20 and 60 °C.

7. Process according to any one of the previous claims, wherein said particles are formed by:
- a compound of formula XᵣYₜ, wherein X represents a chemical element belonging to the group of the transition elements or to one of the groups 13/IIIA, 14/IVA, 15NA of the periodic table, Y represents a chemical element belonging to the group 16/VIA of the periodic table, r and t represent integers independently comprised between 1 and 4,
- a natural or synthetic mineral phase, or
- mixtures thereof.

8. Process according to claim 7, wherein said compound is chosen in the group consisting of TiO₂, ZnS, and ZnO.

9. Process according to any one of the previous claims, wherein said particles have a size such that d₁₀₀<20 µm.

10. Cementitious mixture comprising an air-setting or hydraulic binder and an additive obtainable according to the process of any one of previous claims, said mixture being intended for the further addition of water, whereby said particles tend to migrate towards the surface.

11. Mixture according to claim 10, wherein said additive is present in the mixture in an amount comprised between 1 and 10 wt % with respect to the total.

## Patentansprüche

1. Verfahren zur Herstellung eines photokatalytischen Additivs, das eine Mehrzahl von anorganischen Teilchen umfasst, die mindestens teilweise durch eine hybride anorganischorganische Beschichtung bedeckt sind, wobei das Verfahren die Schritte umfasst:
- Dispergieren der anorganischen Teilchen in einem alkoholischen oder etherischen Lösungsmittel,
- Zusetzen mindestens einer siliziumorganischen Verbindung mit der Formel: 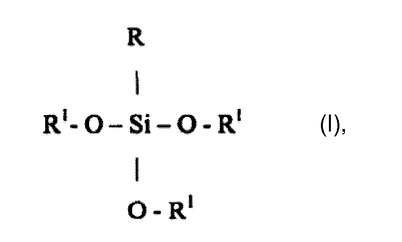 worin R und jeder R¹ unabhängig einen C₁-C₈-Alkylrest, einen C₂-C₈-Alkenylrest oder einen aromatischen Rest, der gegebenenfalls durch einen oder mehrere C₁-C₈-Alkylrest(e) substituiert ist, darstellen, oder 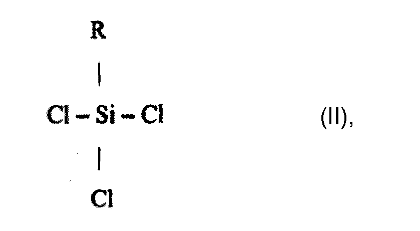 worin R die gleiche Bedeutung hat wie in der Formel (I), zu der Dispersion,
- Zusetzen von Wasser und Mineralsäure zu der Dispersion, so dass ein pH-Wert im Bereich von 0,5 bis 3 erhalten wird, und Bilden mindestens einer chemischen Bindung zwischen einem Rest der organischen Verbindung und der Oberfläche der Teilchen, wodurch die hybride anorganisch-organische Beschichtung gebildet wird,
- Rühren der Dispersion und
- Abtrennen einer festen Phase, die durch die mindestens teilweise beschichteten Teilchen gebildet wird, von der Dispersion.

2. Verfahren nach Anspruch 1, bei dem die mindestens eine siliziumorganische Verbindung der Dispersion in einer Menge zwischen 2 und 20 Gew.-% bezogen auf das Gewicht der Teilchen zugesetzt wird.

3. Verfahren nach Anspruch 1 oder 2, bei dem das Wasser in einer Menge zwischen 5 und 40 Gew.-% bezogen auf das Gewicht der mindestens einen siliziumorganischen Verbindung zugesetzt wird.

4. Verfahren nach einem der vorhergehenden Ansprüche, bei dem die siliziumorganische Verbindung aus der Gruppe, bestehend aus Methyltriethoxysilan, Phenyltriethoxysilan, Isobutyltriethoxysilan, Vinyltriethoxysilan, Methyltrimethoxysilan, Phenyltrimethoxysilan, Isobutyltrimethoxysilan, Vinyltrimethoxysilan, Methyltrichlorsilan, Phenyltrichlorsilan, Isobutyltrichlorsilan und Vinyltrichlorsilan, ausgewählt ist.

5. Verfahren nach einem der vorhergehenden Ansprüche, bei dem der Schritt des Rührens der Dispersion mechanisch und/oder mittels Ultraschall vorzugsweise für einen Zeitraum zwischen 2 und 4 Stunden und vorzugsweise bei einer Temperatur zwischen 20 und 60 °C durchgeführt wird.

6. Verfahren nach einem der vorhergehenden Ansprüche, bei dem die feste Phase durch Sedimentation oder Filtrieren abgetrennt wird und anschließend vorzugsweise für einen Zeitraum zwischen 2 und 4 Stunden und vorzugsweise bei einer Temperatur zwischen 20 und 60 °C getrocknet wird.

7. Verfahren nach einem der vorhergehenden Ansprüche, bei dem die Teilchen aus
- einer Verbindung der Formel XᵣYₜ, worin X ein chemisches Element darstellt, das zu der Gruppe der Übergangselemente oder zu einer der Gruppen 13/IIIA, 14/IVA, 15/VA des Periodensystems gehört, Y ein chemisches Element darstellt, das zu der Gruppe 16/VIA des Periodensystems gehört, r und t unabhängig ganze Zahlen zwischen 1 und 4 darstellen,
- einer natürlichen oder synthetischen Mineralphase oder
- Gemischen davon ausgebildet sind.

8. Verfahren nach Anspruch 7, bei dem die Verbindung aus der Gruppe, bestehend aus TiO₂, ZnS und ZnO, ausgewählt ist.

9. Verfahren nach einem der vorhergehenden Ansprüche, bei dem die Teilchen eine Größe aufweisen, die derart ist, dass d₁₀₀ < 20 µm beträgt.

10. Zementartiges Gemisch, das ein lufthärtendes oder hydraulisches Bindemittel und ein Additiv, das gemäß dem Verfahren nach einem der vorhergehenden Ansprüche erhältlich ist, umfasst, wobei das Gemisch ferner für ein Zusetzen von Wasser vorgesehen ist, wodurch die Teilchen dazu neigen, sich in die Richtung der Oberfläche zu bewegen.

11. Gemisch nach Anspruch 10, wobei das Additiv in dem Gemisch in einer Menge zwischen 1 und 10 Gew.-% bezogen auf die Gesamtmenge vorliegt.

## Revendications

1. Procédé pour la production d'un additif photocatalytique contenant plusieurs particules inorganiques recouvertes au moins partiellement d'un revêtement hybride inorganique et organique, lequel procédé comprend les étapes de :
- dispersion des particules inorganiques dans un solvant à base d'alcool ou d'éther,
- ajout à la dispersion d'au moins un composé organique de silicium de formule : 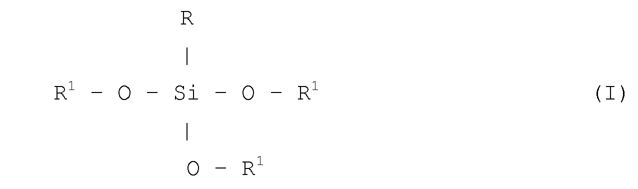 dans laquelle R et chaque R¹ représentent indépendamment un alkyle en C₁-C₈, un alkényle en C₂-C₈ ou un résidu aromatique avec éventuellement substitution par un ou plusieurs alkyles en C₁-C₈, ou 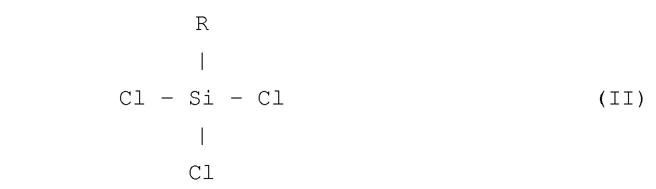 dans laquelle R a la même signification que dans la formule (I),
- ajout à la dispersion d'eau et d'acide minéral afin d'obtenir un pH compris entre 0,5 et 3 et d'établir au moins une liaison chimique entre un résidu dudit composé organique et la surface desdites particules en formant ainsi ledit revêtement hybride organique et inorganique,
- agitation de la dispersion et
- séparation de la dispersion d'une phase solide formée par lesdites particules au moins partiellement enduites.

2. Procédé selon la revendication 1, dans lequel au moins un composé organique de silicium est ajouté à ladite dispersion dans une quantité comprise entre 2 et 20 % en poids par rapport au poids desdites particules.

3. Procédé selon la revendication 1 ou 2, dans lequel ladite eau est ajoutée dans une quantité comprise entre 5 et 40 % en poids par rapport au poids dudit au moins un composé organique de silicium.

4. Procédé selon l'une quelconque des revendications précédentes, dans lequel ledit composé organique de silicium est choisi parmi le groupe comprenant le méthyltriéthoxysilane, le phényltriéthoxysilane, l'isobutyltriéthoxysilane, le vinyltriéthoxysilane, le méthyltriméthoxysilane, le phényltriméthoxysilane, l'isobutyltriméthoxysilane, le vinyltriméthoxysilane, le méthyltrichlorosilane, le phényltrichlorosilane, l'isobutyltrichlorosilane et le vinyltrichlorosilane.

5. Procédé selon l'une quelconque des revendications précédentes, dans lequel ladite étape d'agitation de la dispersion est réalisée par des moyens mécaniques et/ou par des ultrasons pendant une durée comprise de préférence entre 2 et 4 heures et à une température comprise de préférence entre 20 et 60°C.

6. Procédé selon l'une quelconque des revendications précédentes, dans lequel ladite phase solide est séparée par sédimentation ou filtration et séchée successivement pendant une durée comprise de préférence entre 2 et 4 heures et à une température comprise de préférence entre 20 et 60°C.

7. Procédé selon l'une quelconque des revendications précédentes, dans lequel lesdites particules sont formées par :
- un composé de formule XᵣYₜ, où X représente un élément chimique appartenant au groupe des éléments de transition ou à l'un des groupes 13/IIIA, 14/IVA, 15/VA du tableau périodique, Y représente un élément chimique appartenant au groupe 16/VIA du tableau périodique, r et t représentent des nombres entiers compris indépendamment entre 1 et 4,
- une phase minérale naturelle ou de synthèse, ou
- des mélanges de ceux-ci.

8. Procédé selon la revendication 7, dans lequel ledit composé est choisi dans le groupe comprenant TiO₂, ZnS et ZnO.

9. Procédé selon l'une quelconque des revendications précédentes, dans lequel les particules ont une taille telle que d₁₀₀ < 20 µm.

10. Mélange de ciment comprenant un liant durcissant à l'air ou hydraulique et un additif pouvant être obtenu par le procédé selon l'une quelconque des revendications précédentes, ledit mélange étant conçu pour l'ajout futur d'eau, auquel cas les particules ont tendance à migrer vers la surface.

11. Mélange selon la revendication 10, dans lequel ledit additif est présent dans le mélange dans une quantité comprise entre 1 et 10 % en poids par rapport au total.
